# EUROPEAN PATENT APPLICATION

(11) **EP 4 848 188 A1**
(43) Date of publication of application: **02.12.2026**
(21) Application number: 24920216.9
(22) Date of filing: 26.01.2024
(51) Int. Cl.: G06Q 50/04, G06Q 50/06

(54) **PRODUCTION PLAN CREATION METHOD, PRODUCTION PLAN CREATION DEVICE, AND PROGRAM**

(71) Applicant: ASAHI KASEI KABUSHIKI KAISHA, Tokyo 100-0006 (JP)
(72) Inventor: KATSUIKE Satoshi, Yokohama-shi, Kanagawa 220-6001 (JP); KAI Mototaka, Yokohama-shi, Kanagawa 220-6001 (JP); TAKAKUWA Shuya, Yokohama-shi, Kanagawa 220-6001 (JP); SHIMADA Yohei, Yokohama-shi, Kanagawa 220-6001 (JP); OHNO Jun, Tokyo 100-0006 (JP); NAKAYAMA Masahiko, Tokyo 100-0006 (JP); KONDA Masahiro, Tokyo 100-0006 (JP); WATANABE Hiroshi, Tokyo 100-0006 (JP)
(74) Representative: dompatent
(86) International application number: PCT/JP2024/002510
(87) International publication number: WO 2025/158666

(57) **Abstract**

Provided is a production plan creation method for a chemical substance, including: acquiring a target production amount in a first period; breaking down the target production amount in the first period into a primary production plan value being a production plan amount in second periods; acquiring a primary accumulated track record value being an accumulated value of a primary track record value indicating an actual production amount in each second period from a start time of the first period to a current time and a primary accumulated plan value being an accumulated value of the primary production plan value from the start time of the first period to the current time; and generating a corrected plan value obtained by correcting the primary production plan value in the next second period when a value derived based on the primary accumulated track record value and the primary accumulated plan value is smaller than a threshold value or keeping the primary production plan value in the next second period when the value derived is equal to or larger than the threshold value, to reflect the corrected plan value or the kept primary production plan value as the primary production plan value in the next second period.

## Description

### Technical Field

The present invention relates to a production plan creation method, a production plan creation device, and a program.

### Background Art

It is expected that utilization of variable renewable energy becomes more common in the future. As a form of a method of using the variable renewable energy, it is conceivable that hydrogen is manufactured by using the variable renewable energy and the manufactured hydrogen is at least temporarily accumulated to be used in a post-process.

An electrolysis system is described in Patent Literature 1. The electrolysis system has a power generation device, a power distribution device, an electrolysis device, and a pressure raising device. The power generation device generates electric power by using the variable renewable energy. The power distribution device distributes the generated electric power. The electrolysis device executes electrolysis of water by using the distributed electric power. The pressure raising device raises the pressure of hydrogen and oxygen generated by the electrolysis device by using the distributed electric power (surplus electric power exceeding power consumption of the electrolysis device).

### Citation List

### Patent Literature

[PTL 1] JP 2019-026858 A

### Summary of Invention

### Technical Problem

In a production facility such as a plant, a target production amount in a predetermined period is sometimes set. For example, between a supplier and a purchaser, an arrangement (off-take agreement) for purchasing or selling a product to be provided by the supplier is made.

If the off-take agreement is concluded for a chemical substance, the supplier formulates a production plan based on a target value of a production amount set in the off-take agreement. For example, medium-term and short-term production plans for the chemical substance are formulated from past weather information, a power generation track record, and the like. However, in an actual production process, a difference is generated between a production amount in the formulated production plan and an actual production amount. Thus, the target value of the production amount is required to be attained even when the difference is generated between the production amount in the production plan and the actual production amount.

An object of the present invention is to provide a production plan creation method, a production plan creation device, and a program for creating a production plan that allows attainment of (compliance with) a target value of a production amount even when a difference is generated between a production amount in a production plan for a chemical substance in a predetermined period set in advance and an actual production amount.

### Solution to Problem

[1] In order to achieve the above-mentioned object, according to one aspect of the present invention, there is provided a production plan creation method for a chemical substance manufactured by using hydrogen derived from variable renewable energy as a raw material, the production plan creation method including: a first step of acquiring information indicating a target production amount being a target value of a production amount in a first period; a second step of breaking down the target production amount in the first period into a primary production plan value being a production plan amount in second periods shorter than the first period; a third step of acquiring a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and a fourth step of generating a corrected plan value obtained by correcting the primary production plan value in a next second period when a value derived based on the primary accumulated track record value and the primary accumulated plan value is smaller than a threshold value set in advance or keeping the primary production plan value in the next second period when the value derived is equal to or larger than the threshold value, to reflect the corrected plan value or the kept primary production plan value as the primary production plan value in the next second period.
[2] Further, in another aspect of the production plan creation method for a chemical substance manufactured by using hydrogen derived from variable renewable energy as a raw material described above, the fourth step includes distributing, when a difference or a ratio between the primary accumulated track record value and the primary accumulated plan value is less than a threshold value set in advance, the difference between the primary accumulated track record value and the primary accumulated plan value into the second periods being remaining second periods, to generate the corrected plan value in the next second period.
[3] Further, in another aspect of the production plan creation method for a chemical substance manufactured by using hydrogen derived from variable renewable energy as a raw material described above, the production plan creation method further includes: an acquisition step of acquiring, before the first step, information indicating a long-term target production amount being a target value of a production amount in a third period longer than the first period; and a breakdown step of breaking down the long-term target production amount in the third period into the target production amount in the first periods. The breakdown step includes calculating an amount of wind power generation or an amount of solar power generation in the first period by using wind conditions data and power generation efficiency of a renewable energy power generation facility or data of an amount of insolation and power generation efficiency of a renewable energy power generation facility, and breaking down the long-term target production amount in the third period into the target production amount based on a calculated value.
[4] Further, in another aspect of the production plan creation method for a chemical substance manufactured by using hydrogen derived from variable renewable energy as a raw material described above, the target production amount in the first period includes a target production amount of the chemical substance derived from wind power and a target production amount of the chemical substance derived from sunlight.
[5] Further, in another aspect of the production plan creation method for a chemical substance manufactured by using hydrogen derived from variable renewable energy as a raw material described above, the breakdown step includes calculating the target production amount of the chemical substance derived from wind power based on:
   the target production amount of the chemical substance derived from wind power = the long-term target production amount in the third period × the number of operating days of a manufacturing plant for the chemical substance in the first period/a total number of operating days of the manufacturing plant × the amount of wind power generation in the first period/a total amount of power generation in the first period.
[6] Further, in another aspect of the production plan creation method for a chemical substance manufactured by using hydrogen derived from variable renewable energy as a raw material described above, the breakdown step includes calculating the target production amount of the chemical substance derived from sunlight based on:
   the target production amount of the chemical substance derived from sunlight = the long-term target production amount in the third period × the number of operating days of a manufacturing plant for the chemical substance in the first period/a total number of operating days of the manufacturing plant × the amount of solar power generation in the first period/a total amount of power generation in the first period.
[7] In order to achieve the above-mentioned object, according to one aspect of the present invention, there is provided a production plan creation device for a chemical substance manufactured by using hydrogen derived from variable renewable energy as a raw material, the production plan creation device including: an acquisition module configured to acquire information indicating a target production amount being a target value of a production amount in a first period; a plan creation module configured to break down the target production amount in the first period into a primary production plan value being a production plan amount in second periods shorter than the first period; and a decision module configured to: acquire a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and generate a corrected plan value obtained by correcting the primary production plan value in a next second period when a value derived based on the primary accumulated track record value and the primary accumulated plan value is smaller than a threshold value set in advance or keep the primary production plan value in the next second period when the value derived is equal to or larger than the threshold value, to reflect the corrected plan value or the kept primary production plan value as the primary production plan value in the next second period.
[8] In order to achieve the above-mentioned object, according to one aspect of the present invention, there is provided a program for causing a computer of a production plan creation device for a chemical substance manufactured by using hydrogen derived from variable renewable energy as a raw material to execute: a first step of acquiring information indicating a target production amount being a target value of a production amount in a first period; a second step of breaking down the target production amount in the first period into a primary production plan value being a production plan amount in second periods shorter than the first period; a third step of acquiring a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and a fourth step of generating a corrected plan value obtained by correcting the primary production plan value in a next second period when a value derived based on the primary accumulated track record value and the primary accumulated plan value is smaller than a threshold value set in advance or keeping the primary production plan value in the next second period when the value derived is equal to or larger than the threshold value, to reflect the corrected plan value or the kept primary production plan value as the primary production plan value in the next second period.

### Advantageous Effects of Invention

According to the present invention, it is possible to provide the production plan creation method, the production plan creation device, and the program for creating the production plan that allows attainment of (compliance with) the target value of the production amount even when a difference is generated between the production amount in the production plan for a chemical substance in the predetermined period set in advance and the actual production amount.

### Brief Description of Drawings

FIG. 1 is a diagram for illustrating an example of a plant control system (1) in this embodiment.
FIG. 2 is a block diagram for illustrating an example of a production plan creation device (100) included in the plant control system (1) of this embodiment.
FIG. 3 is an explanatory graph for showing an example of processing of the production plan creation device (100) of this embodiment.
FIG. 4 is a block diagram for illustrating an example of a plant (400) in this embodiment.
FIG. 5 is a block diagram for illustrating a schematic functional configuration inside a plant control device (450) included in the plant (400) in this embodiment.
FIG. 6 is a table for showing a configuration of data stored by a parameter memory unit (456) of the plant control device (450) included in the plant (400) in this embodiment.
FIG. 7 is a flowchart for illustrating an example of operation of the plant control system (1) in this embodiment.
FIG. 8 is a flowchart for illustrating an example of the operation of the plant control system (1) in this embodiment.
FIG. 9 is an explanatory graph for showing an example of the processing of the production plan creation device (100) of this embodiment.
FIG. 10 is a flowchart for illustrating another example of the operation of the plant control system (1) in this embodiment.

### Description of Embodiments

Next, a production plan creation method, a production plan creation device, and a program according to an embodiment of the present invention are described with reference to the drawings. The following embodiment described below is described merely as an example, and the present invention can be applied to any embodiment without being limited to the following embodiment. Throughout the drawings for illustrating the embodiment, components having the same function are denoted by identical reference symbols, and a duplicate description thereof is omitted.

Further, "based on XX" as used herein means "based on at least XX," including a case which is based on another element in addition to XX. Further, "based on XX" is not limited to a case in which XX is directly used, and a case which is based on an object obtained by performing calculation or processing on XX is also included. "XX" is any element (for example, any information).

### (Plant Control System)

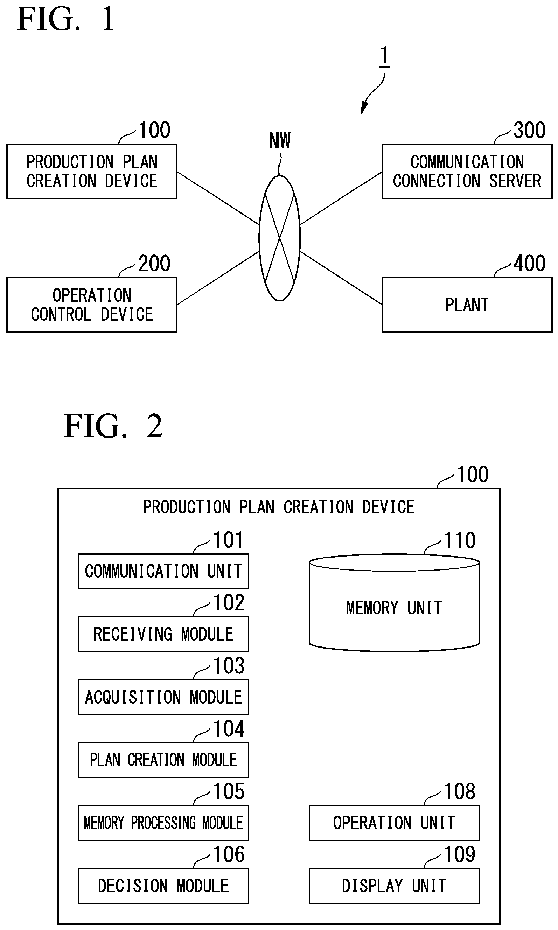

FIG. 1 is a diagram for illustrating an example of a plant control system 1 in this embodiment. The plant control system 1 controls a plant that manufactures a chemical substance by using hydrogen derived from variable renewable energy as a raw material. The "hydrogen derived from variable renewable energy" refers to hydrogen manufactured by using the variable renewable energy. The hydrogen manufactured by using the variable renewable energy is at least temporarily accumulated. An example of the chemical substance is ammonia. The description is continued below about a case in which ammonia is applied as an example of the chemical substance.

The "variable renewable energy" is energy with output power that greatly varies depending on natural conditions and the like. The variable renewable energy is referred to also as, for example, "natural renewable energy," "renewable energy," or the like. Examples of the variable renewable energy include solar energy, wind energy, tidal energy, and the like. The variable renewable energy is used for power generation.

The plant control system 1 includes a production plan creation device 100, an operation control device 200, and a communication connection server (for example, Object Linking and Embedding (OLE) for Process Control (OPC) server) 300. In FIG. 1, a plant 400 is illustrated in addition to the production plan creation device 100, the operation control device 200, and the communication connection server 300.

The production plan creation device 100, the operation control device 200, the communication connection server 300, and the plant 400 can communicate to and from each other through a communication network NW. The communication network NW includes the Internet, a wide area network (WAN), a local area network (LAN), a public line, a provider device, a dedicated line, a wireless base station, and the like.

The production plan creation device 100 creates a production plan for the chemical substance. For example, the production plan creation device 100 creates a long-term production plan, a medium-term production plan, and a short-term production plan concerning production of the chemical substance. An example of the long-term production plan is a production plan in units of year (for example, one year). An example of the medium-term production plan is a monthly production plan. An example of the short-term production plan is a production plan including an average planned production amount in one day in a target month, calculated by dividing the monthly production plan by the number of days.

Concerning operation of the plant 400, the production plan creation device 100 creates a medium-term operation plan based on the medium-term production plan and creates a short-term operation plan based on the short-term production plan. The production plan creation device 100 registers the created medium-term operation plan and short-term operation plan in a database (not shown).

The operation control device 200 acquires the medium-term operation plan and the short-term operation plan registered in the database by the production plan creation device 100. The operation control device 200 creates plant operation control information for controlling the operation of the plant 400 based on the acquired medium-term operation plan and short-term operation plan, and transmits the plant operation control information to a plant control device 450 to be described later.

The communication connection server 300 acquires information indicating a load factor of the plant 400, information indicating a planned production amount, information indicating a track record value of an amount of power generation, information indicating a power monitoring value, information indicating a state of the plant, such as a tank remaining amount, information indicating a production track record value of hydrogen, information indicating a production track record value of the chemical substance, information indicating a warning from a distributed control system of the plant, and the like. The communication connection server 300 creates track record value information including information indicating identification information of the plant and the production track record value of the chemical substance, and transmits the track record value information to the production plan creation device 100. The identification information of the plant is used to identify each of a plurality of plants in a case in which the plurality of plants are controlled by the plant control system 1. In this embodiment, a case in which a production plan of one plant is created is described as an example.

The plant 400 manufactures hydrogen through water electrolysis by using electric power obtained from the variable renewable energy, and at least temporarily stores the manufactured hydrogen in a storage device. The plant 400 manufactures a product such as the chemical substance by using the hydrogen supplied from the storage device as a raw material.

For the production plan creation device 100, the operation control device 200, and the communication connection server 300, for example, a stationary computer device may be used, or a portable computer device such as a smartphone or a tablet-type computer (tablet PC) may be used.

A detailed description is now given of the production plan creation device 100 and the plant 400 included in the plant control system 1. FIG. 2 is a block diagram for illustrating an example of the production plan creation device 100 included in the plant control system 1 in this embodiment.

### (Production Plan Creation Device 100)

The production plan creation device 100 includes a communication unit 101, a receiving module 102, an acquisition module 103, a plan creation module 104, a memory processing module 105, a decision module 106, an operation unit 108, a display unit 109, and a memory unit 110.

The communication unit 101 is implemented by a communication module. The communication unit 101 communicates to and from an external communication device through the network NW. The communication unit 101 executes the communication by a communication system such as a wired LAN. The communication unit 101 may execute the communication by a wireless communication system such as a wireless LAN, Bluetooth (registered trademark), or Long Term Evolution (LTE) (registered trademark).

The display unit 109 is, for example, a display, and includes a touch panel. The memory unit 110 is implemented by a hard disk drive (HDD), a flash memory, a random access memory (RAM), a read only memory (ROM), and the like, and stores information. The memory unit 110 stores the information indicating the production track record value of the chemical substance included in the track record value information acquired from the communication connection server 300 in association with year, month, and day and a clock time of the acquisition. The memory unit 110 may be realized in cloud.

The operation unit 108 is an input device that receives operation by an operator, and is, for example, a touch panel. The operator executes operation of inputting, to the operation unit 108, information indicating a target value of a production amount (hereinafter referred to as "target production amount") of the chemical substance in a first period and a threshold value. The threshold value is used in a case of determining whether or not to keep a primary production plan value to be described later, and is set (decided) in advance. With this configuration, the acquisition module 103 acquires the information indicating the target production amount of the chemical substance in the first period and the threshold value. An example of the first period is one month, and the target production amount of the chemical substance in the first period may correspond to the medium-term operation plan. The description is continued below about a case in which the first period is one month as an example.

For example, a margin may be used as the threshold value. The margin is the ratio of a production amount that can be obtained by operation at the maximum degree to a production amount in normal operation of the plant. In the plant in which 1.1 is set as the margin, design is made such that at most 1.1 times the chemical substance can be produced relative to the production amount in the normal operation. For example, it is assumed that the number of operating days of the plant in the first period is 30 days and a target production amount in 10 days from start of the first period is T. In this case, the plant is designed to be capable of production of up to 1.1T in anticipation of an allowance. Then, through use of a formula (2) to be described later, a production plan amount in a second period is corrected to achieve, in the remaining 20 days, production for a difference between 1.1PV obtained by anticipating the margin (threshold value) for a primary accumulated plan value PV and a primary accumulated track record value EV to be described later. Details thereof are described later.

The target production amount of the chemical substance in the first period may be a target production amount of the chemical substance derived from wind power, or a target production amount of the chemical substance derived from sunlight. The target production amount of the chemical substance in the first period may include both the target production amount of the chemical substance derived from wind power and the target production amount of the chemical substance derived from sunlight. The "target production amount of the chemical substance derived from wind power" refers to a chemical substance manufactured by using, as a raw material, hydrogen manufactured by using wind power generation. The "target production amount of the chemical substance derived from sunlight" refers to a chemical substance manufactured by using, as a raw material, hydrogen manufactured by using solar power generation.

The memory processing module 105 acquires the threshold value from the acquisition module 103, and stores the threshold value in the memory unit 110 in association with year, month, and day and a clock time of the acquisition.

The plan creation module 104 acquires the information indicating the target production amount of the chemical substance in the first period from the acquisition module 103. The plan creation module 104 creates information indicating the production plan amount in the second period (hereinafter referred to as "primary production plan value") based on the acquired information indicating the target production amount of the chemical substance in the first period. Specifically, the plan creation module 104 creates the primary production plan value by breaking down the target production amount of the chemical substance in the first period into the production plan amount in the second periods shorter than the first period.

For example, the plan creation module 104 evenly splits (divides) the target production amount of the chemical substance in the first period by the number of planned operating days in the first period based on a formula (1), to thereby break down the target production amount of the chemical substance in the first period into the production plan amount in the second periods (in units of day) to create the primary production plan value. In this case, an example of the second period is one day, and the primary production plan value of the chemical substance in the second period may correspond to the short-term operation plan. The description is continued below about a case in which the second period is one day as an example. 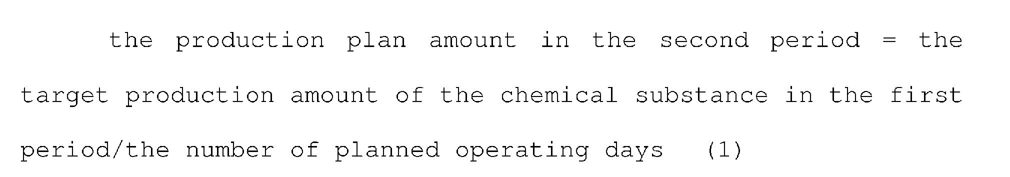 the production plan amount in the second period = the target production amount of the chemical substance in the first period/the number of planned operating days (1) (1)\

For example, the target production amount of the chemical substance derived from wind power in the first period may be derived based on an annual production amount of the chemical substance derived from wind power, the number of operating days of the plant in each month, and an annual total number of operating days of the plant.

For example, the target production amount of the chemical substance derived from sunlight in the first period may be derived based on an annual production amount of the chemical substance derived from sunlight, the number of operating days of the plant in each month, and an annual total number of operating days of the plant.

For example, the target production amount of the chemical substance in the first period may be derived by summing up the target production amount of the chemical substance derived from wind power in the first period and the target production amount of the chemical substance derived from sunlight in the first period.

The plan creation module 104 stores information indicating the created primary production plan value of the chemical substance in the second period in the memory unit 110 in association with year, month, and day and a clock time of the creation. Further, the plan creation module 104 creates the short-term operation plan based on the created primary production plan value of the chemical substance in the second period, and stores information indicating the created short-term operation plan in a database in association with the information indicating the primary production plan value.

The communication unit 101 receives the track record value information transmitted by the communication connection server 300. For example, the communication connection server 300 transmits the track record value information at a predetermined cycle. An example of the predetermined cycle is a period shorter than the second period.

The receiving module 102 receives the track record value information received by the communication unit 101. The memory processing module 105 acquires, from the receiving module 102, the information indicating the production track record value of the chemical substance included in the track record value information, and stores the information in the memory unit 110 in association with year, month, and day and a clock time of the acquisition.

The decision module 106 acquires, from the memory unit 110, one or a plurality of pieces of the information indicating the production track record value of the chemical substance acquired from a start time of the first period to a current time. The decision module 106 derives an actual production amount (production track record value) of the chemical substance in each second period from the start time of the first period to the current time based on the acquired one or plurality of pieces of the information indicating the production track record value of the chemical substance. The decision module 106 derives an accumulated value (hereinafter referred to as "primary accumulated track record value EV") of information indicating the derived production track record value (hereinafter referred to as "primary track record value") from the start time of the first period to the current time.

The decision module 106 acquires, from the memory unit 110, one or a plurality of pieces of the information indicating the primary production plan value of the chemical substance in the second period, created from the start time of the first period to the current time. The decision module 106 derives an accumulated value (hereinafter referred to as "primary accumulated plan value PV") of one or a plurality of primary production plan values of the chemical substance in the second period from the start time of the first period to the current time based on the acquired one or plurality of pieces of the information indicating the primary production plan value of the chemical substance in the second period.

The decision module 106 executes primary production plan value determination processing based on information indicating the derived primary accumulated track record value EV and information indicating the primary accumulated plan value PV. The primary production plan determination processing is described. The decision module 106 derives a computed value by executing predetermined computation from the primary accumulated track record value EV and the primary accumulated plan value PV. An example of the predetermined computation is obtaining a difference between the primary accumulated track record value EV and the primary accumulated plan value PV or obtaining a ratio between the primary accumulated track record value EV and the primary accumulated plan value PV.

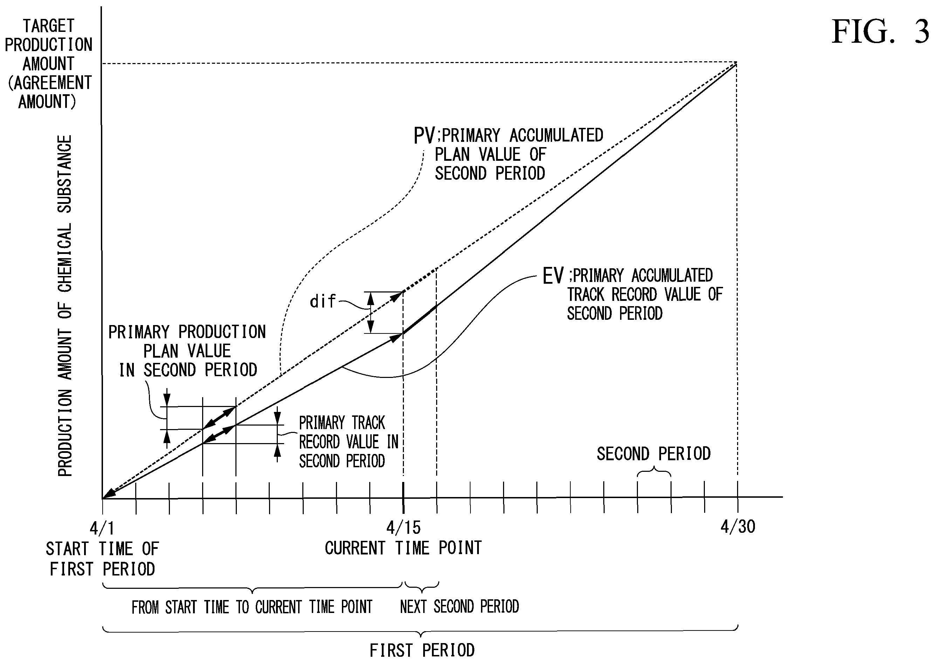

FIG. 3 is an explanatory graph for showing an example of processing of the production plan creation device 100 of this embodiment. In FIG. 3, a horizontal axis indicates the first period, and a vertical axis indicates the production amount of the chemical substance. As an example, a description is given of a case in which the first period is one month from April 1 to April 30 and the second period is one day. A dashed line indicates the primary accumulated plan value EV of the second period. A solid line indicates the primary accumulated track record value PV of the second period. FIG. 3 shows the target production amount (agreement amount) of the chemical substance in the first period and the primary production plan value and the primary track record value in each second period.

The decision module 106 acquires the threshold value from the memory unit 110. The decision module 106 determines whether the derived difference between the primary accumulated track record value EV and the primary accumulated plan value PV is smaller than a first threshold value or is equal to or larger than the first threshold value. The decision module 106 may determine whether the derived ratio between the primary accumulated track record value EV and the primary accumulated plan value PV is lower than a second threshold value or is equal to or higher than the second threshold value. The first threshold value is a threshold value in a case of determining the difference between the primary accumulated track record value EV and the primary accumulated plan value PV. The second threshold value is a threshold value in a case of determining the ratio between the primary accumulated track record value EV and the primary accumulated plan value PV. The first threshold value is different from the second threshold value. As an example, a description is given of a case in which the start time of the first period is April 1 and a current time point is April 15. FIG. 3 shows a difference dif between the primary accumulated track record value EV and the primary accumulated plan value PV at the current time point.

When the difference dif between the primary accumulated track record value EV and the primary accumulated plan value PV at the current time point ((primary accumulated track record value EV) - ((primary accumulated plan value PV)) is smaller than the first threshold value, the decision module 106 generates a corrected plan value obtained by correcting the primary production plan value at the current time point as the primary production plan value to be used in the next second period. When the ratio between the primary accumulated track record value EV and the primary accumulated plan value PV at the current time point ((primary accumulated track record value EV) / (primary accumulated plan value PV)) is lower than the second threshold value, the decision module 106 generates the corrected plan value obtained by correcting the primary production plan value at the current time point as the primary production plan value to be used in the next second period.

For example, the decision module 106 distributes the difference dif between the primary accumulated track record value EV and the primary accumulated plan value PV into the remaining second periods to generate the corrected plan value in the next second period. Specifically, the decision module 106 derives a production amount to be added in the next second period based on the formula (2). 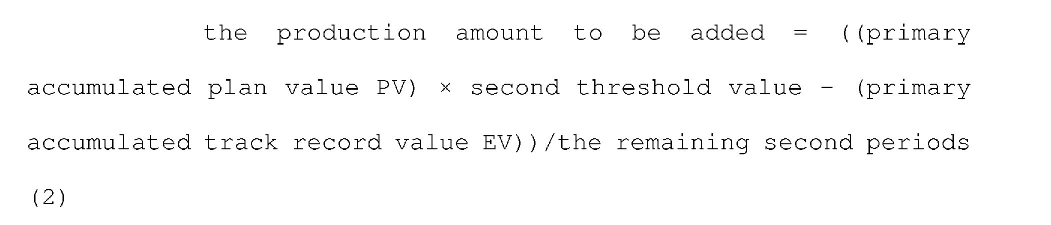 the production amount to be added = ((primary accumulated plan value PV) × second threshold value - (primary accumulated track record value EV))/the remaining second periods (2)

The decision module 106 creates the corrected plan value by adding the production amount to be added to the primary production plan value.

A case in which the margin is employed as the threshold value is described as an example. For example, it is assumed that the number of operating days of the plant in the first period is 30 days and PV and EV in 10 days from start of the first period are T and 0.9T, respectively. In this case, because the plant is designed to be capable of production of up to 1.1T in the 10 days, 0.2T as 1.1T-0.9T is required to be produced in the remaining 20 days for compliance with the target production amount. Moreover, the production amount to be added in the next one day is calculated as follows. $the production amount to be added = \left(1.1T-0.9T\right) / 20 = 0.01 T$

By employing the margin as the threshold value in this manner, a plan can be made to achieve production by an amount larger than the actual amount of deficiency by the amount set also in consideration of the margin as the amount of chemical substance to be additionally produced in the remaining days. Thus, deficiency of the production amount at the end of the second period can be prevented.

When the difference dif between the primary accumulated track record value EV and the primary accumulated plan value PV at the current time point is equal to or larger than the first threshold value, the decision module 106 decides to keep the primary production plan value in the next second period. When the ratio between the primary accumulated track record value EV and the primary accumulated plan value PV at the current time point is equal to or higher than the second threshold value, the decision module 106 decides to keep the primary production plan value in the next second period.

When the decision module 106 has generated the corrected plan value obtained by correcting the primary production plan value in the next second period, the decision module 106 reflects the generated corrected plan value as the primary production plan value in the next second period.

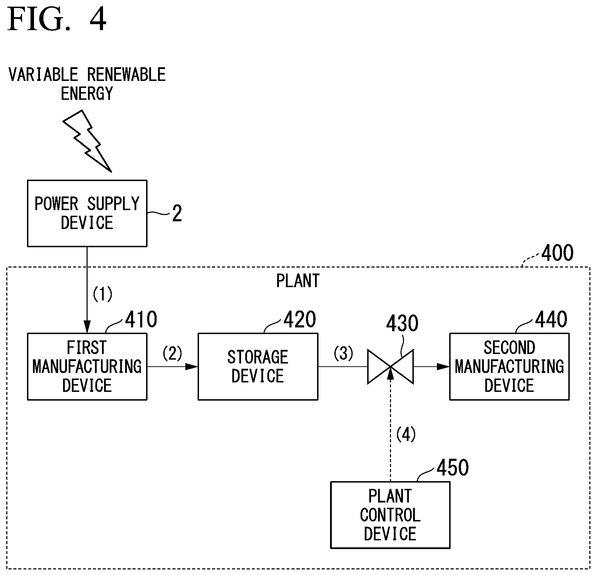

FIG. 4 is a block diagram for illustrating an example of the plant 400 in this embodiment.

### (Plant 400)

The plant 400 includes a first manufacturing device 410, a storage device 420, a flow rate control valve 430, a second manufacturing device 440, and the plant control device 450. Further, a power supply device 2 supplies electric power to at least the first manufacturing device 410. An outline of each of those devices is as described below.

The power supply device 2 supplies electric power generated by using variable renewable energy to at least the first manufacturing device 410. The power supply device 2 may be a device that generates electric power by using the variable renewable energy. As another example, the power supply device 2 may receive electric power generated by another device by using the variable renewable energy, and supply the electric power to the first manufacturing device 410.

The first manufacturing device 410 manufactures hydrogen through water electrolysis by using at least the electric power supplied from the power supply device 2 (electric power obtained from the variable renewable energy). That is, the first manufacturing device 410 manufactures the hydrogen and oxygen by using water as a raw material. The hydrogen manufactured by the first manufacturing device 410 is transferred to the storage device 420 through a pipe and the like. The oxygen manufactured by the first manufacturing device 410 is transferred to, for example, another storage device that is not shown through a pipe and the like.

The storage device 420 at least temporarily stores the hydrogen manufactured by the first manufacturing device 410. The storage device 420 is, for example, a tank for storing a liquified gas or a gas. The storage device 420 includes a measurement instrument for measuring a remaining amount of the hydrogen in the device. A reference range of a storage amount in the storage device 420 is described later. The reference range is represented by a lower limit value and an upper limit value (for example, percentage) of the storage amount in the storage device 420 for keeping operation of the plant.

The flow rate control valve 430 is a valve for controlling a flow rate. The flow rate control valve 430 is disposed in the middle of a pipe or the like for supplying the hydrogen from the storage device 420 to the second manufacturing device 440. The flow rate control valve 430 includes, for example, a mechanism that allows a restrictor opening degree to be steplessly varied. The restrictor opening degree of the flow rate control valve 430 is allowed to be varied based on a control signal from the plant control device 450.

The second manufacturing device 440 is a device that manufactures a product such as a chemical substance by using the hydrogen supplied from the storage device 420 as a raw material. A raw material other than the hydrogen required to manufacture the product is also supplied to the second manufacturing device 440. As an example, the second manufacturing device 440 manufactures ammonia being the product by using the hydrogen and nitrogen as raw materials. The second manufacturing device 440 may manufacture other products. For example, the second production device 440 may produce methanol, an organic hydride, methane, carbon monoxide, light oil, hydrogen peroxide, and the like in addition to ammonia. In any case, the second manufacturing device 440 consumes the hydrogen supplied from the storage device 420 as one raw material.

The plant control device 450 controls the manufacturing of the product by the plant 400. The plant control device 450 receives the plant operation control information transmitted by the operation control device 200. The plant control device 450 controls the manufacturing of the product by the plant 400 based on the received plant operation control information.

Specifically, the plant control device 450 controls a supply amount of the hydrogen from the storage device 420 to the second manufacturing device 440. For this control, the plant control device 450 outputs a control signal for controlling the restrictor opening degree of the flow rate control valve 430. The amount of hydrogen supply from the flow rate control valve 430 is a time integral of a product of the restrictor opening degree and a flow velocity of the hydrogen (length across which the hydrogen flows per unit time). In other words, the amount of hydrogen supply from the flow rate control valve 430 is a time integral of a flow rate per unit time (flow rate depends on the restrictor opening degree of the flow rate control valve 430). The control may be executed by measuring an actual flow rate of the hydrogen by using a flowmeter or the like and feeding back the measured flow rate to the plant control device 450.

In FIG. 4, (1) denotes the electric power supplied from the power supply device 2 to the first manufacturing device 410. (2) denotes the hydrogen that is manufactured by the first manufacturing device 410 and is transferred to the storage device 420. (3) denotes the hydrogen supplied from the storage device 420 to the second manufacturing device 440 through the flow rate control valve 430. (4) denotes the control signal for controlling the opening degree of the flow rate control valve 430. That is, the control signal of (4) controls the amount of hydrogen supply from the storage device 420 to the second manufacturing device 440.

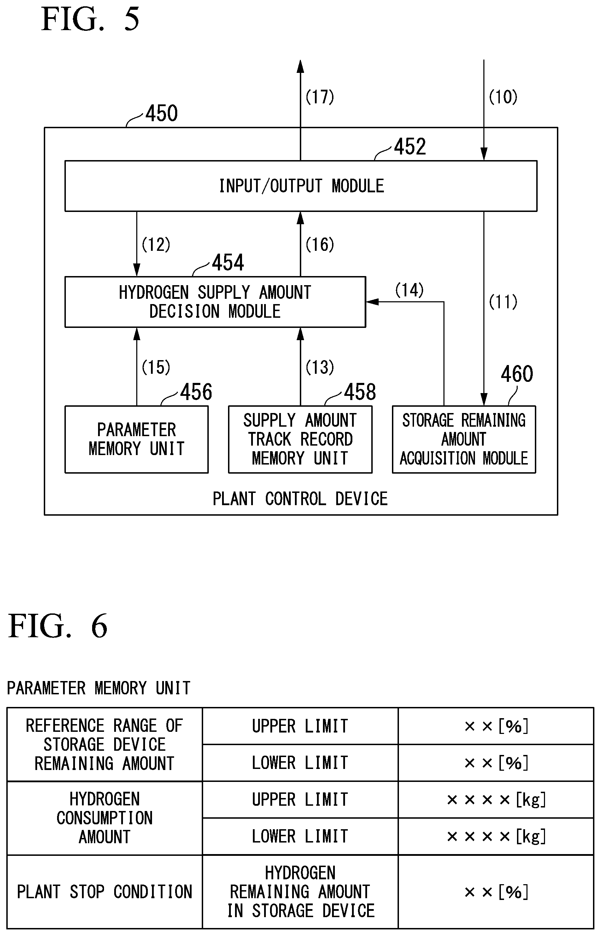

FIG. 5 is a block diagram for illustrating a schematic functional configuration inside the plant control device 450 included in the plant 400 in this embodiment. As illustrated in FIG. 5, the plant control device 450 includes an input/output module 452, a hydrogen supply amount decision module 454, a parameter memory unit 456, a supply amount track record memory unit 458, and a storage remaining amount acquisition module 460.

The plant control device 450 is implemented by using, for example, an electronic circuit. The plant control device 450 may be implemented by using a computer and a program. Each module or unit configuring the plant control device 450 may have a memory device as required. The memory device is implemented by using, for example, a semiconductor memory or a magnetic hard disk.

The input/output module 452 inputs or outputs a signal. Specifically, the input/output module 452 acquires a signal indicating the remaining amount of the hydrogen in the storage device 420 from the external, and transfers the signal to the storage remaining amount acquisition module 460. Further, the input/output module 452 outputs, to the external, a signal relating to the hydrogen supply amount transferred from the hydrogen supply amount decision module 454. The input/output module 452 may further input or output other signals.

The hydrogen supply amount decision module 454 decides the supply amount of the hydrogen to be supplied to the second manufacturing device 440. The hydrogen supply amount decision module 454 acquires data of a track record of the hydrogen supply amount from the supply amount track record memory unit 458 in order to decide the hydrogen supply amount. Moreover, the hydrogen supply amount decision module 454 acquires information on the remaining amount of the hydrogen in the storage device 420 from the storage remaining amount acquisition module 460. Further, the hydrogen supply amount decision module 454 reads values of a plurality of parameters required to decide the hydrogen supply amount from the parameter memory unit 456.

Upon deciding the hydrogen supply amount, the hydrogen supply amount decision module 454 outputs a signal for controlling the flow rate control valve 430. By this signal, the plant control device 450 controls the amount of hydrogen supplied to the second manufacturing device 440. The hydrogen supply amount decision module 454 may output a signal representing a numeric value itself of the decided hydrogen supply amount. As another example, the hydrogen supply amount decision module 454 may calculate the opening degree of the flow rate control valve 430 based on the decided hydrogen supply amount, and output a signal representing a numeric value corresponding to the opening degree.

Further, a flowmeter may be disposed, for example, in the vicinity of the flow rate control valve 430 on a flow path of the hydrogen, and the actual flow rate of the hydrogen measured by this flowmeter may be fed back to the hydrogen supply amount decision module 454. In this case, the hydrogen supply amount decision module 454 controls the opening degree of the flow rate control valve 430 based on, for example, information on the fed-back actual flow rate.

The parameter memory unit 456 stores parameters required for the hydrogen supply amount decision module 454 to decide the hydrogen supply amount. The parameters stored by the parameter memory unit 456 are described later.

The supply amount track record memory unit 458 stores data of a track record value of the amount of hydrogen supplied to the second manufacturing device 440, that is, an amount of hydrogen consumed in the second manufacturing device 440. The supply amount track record memory unit 458 stores, for example, a numeric value of the hydrogen supply amount.

The storage remaining amount acquisition module 460 acquires a signal about the remaining amount of the hydrogen in the storage device 420 from the external (from the storage device 420). Further, the storage remaining amount acquisition module 460 transfers data relating to the hydrogen remaining amount to the hydrogen supply amount decision module 454.

Content of signals received or transmitted by each module or unit illustrated in FIG. 5 is as follows. (10) and (11) denote the signal that is acquired by the storage remaining amount acquisition module 460 through the input/output module 452 and represents the remaining amount of the hydrogen in the storage device 420. (12) denotes a hydrogen supply amount request signal transferred from the input/output module 452 to the hydrogen supply amount decision module 454. The hydrogen supply amount request signal of (12) may be based on a request from the external of the plant control device 450. (13) denotes the information on the hydrogen supply amount that the hydrogen supply amount decision module 454 refers to from the supply amount track record memory unit 458. (14) denotes the signal that is transferred to the hydrogen supply amount decision module 454 by the storage remaining amount acquisition module 460 and represents the remaining amount of the hydrogen in the storage device 420. (15) denotes the signal representing values of the parameters read out from the parameter memory unit 456 by the hydrogen supply amount decision module 454. (16) and (17) denote the signal for controlling the opening degree of the flow rate control valve 430 based on the hydrogen supply amount decided by the hydrogen supply amount decision module 454. This signal for controlling the opening degree of the flow rate control valve 430 is output through the input/output module 452.

FIG. 6 is a table for showing a configuration of data stored by the parameter memory unit 456 of the plant control device 450 included in the plant 400 in this embodiment. Those parameters are set by, for example, an application program for parameter setting operated by an administrator of the plant. The data stored by the parameter memory unit 456 includes the reference range of the storage device remaining amount, a hydrogen consumption amount, and a plant stop condition.

The reference range of the storage device remaining amount is a basis of the remaining amount of the hydrogen in the storage device 420 in the operation of the plant 400. The parameter memory unit 456 stores the lower limit value and the upper limit value (both are percentages to the whole storage amount of the storage device 420) as the reference range of the storage device remaining amount. The operation is planned such that the hydrogen remaining amount in the storage device 420 always falls within this range. As an example, the reference range of the storage device remaining amount is determined on the basis of a pressure in the storage device 420.

For example, when a design pressure (maximum value of a hydrogen pressure) in the storage device 420 is defined as 100%, the lower limit value is 30% of the design pressure, and the upper limit value is 70% of the design pressure. The lower limit value may be smaller than 30% of the design pressure, and the upper limit value may be larger than 70% of the design pressure. The limit values are not particularly limited. The reference range of the storage device remaining amount may be determined on the basis of a weight (for example, kilogram) of the hydrogen in the storage device 420 besides the design pressure in the storage device 420.

The hydrogen consumption amount is the amount of hydrogen consumed by the second manufacturing device 440. The parameter memory unit 456 stores an upper limit value and a lower limit value (unit is, for example, kilogram) of the hydrogen consumption amount.

The plant stop condition is a reference value of the remaining amount of the hydrogen in the storage device 420 (percentage to the whole storage amount of the storage device 420). When the remaining amount of the hydrogen is smaller than this reference value, the plant control device 450 executes control for stopping the operation of the plant 400.

### (Operation of Plant Control System 1)

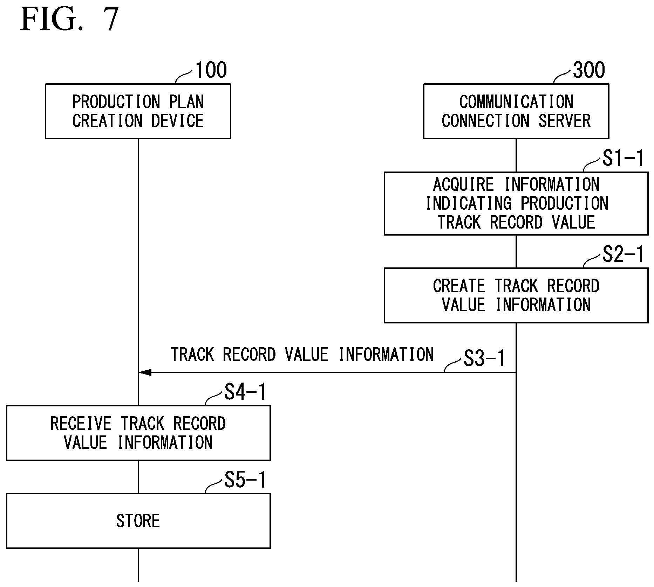

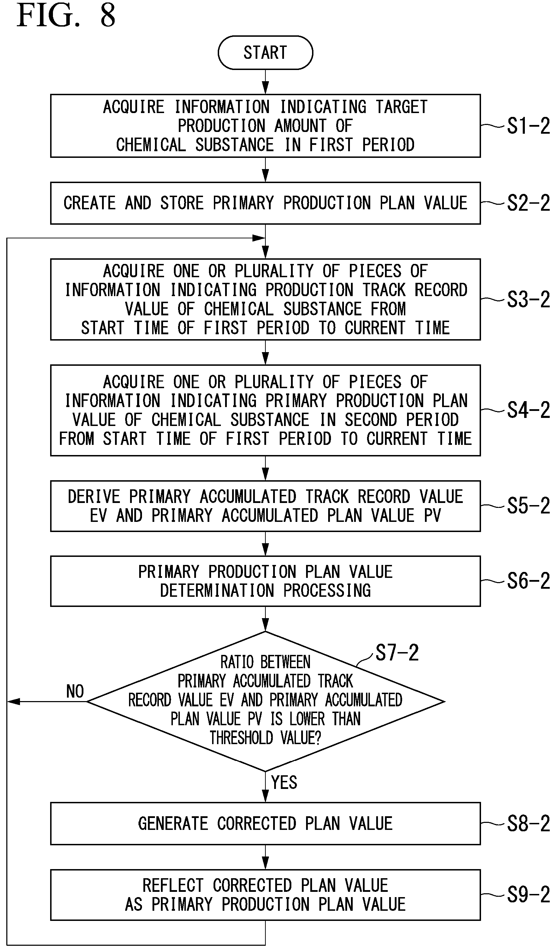

Operation of the plant control system 1 is described with reference to FIG. 7 and FIG. 8. FIG. 7 is a flowchart for illustrating an example of the operation of the plant control system 1 in this embodiment. Processing of accumulating the track record value information by the production plan creation device 100 is described with reference to FIG. 7.

### (Step S1-1)

The communication connection server 300 acquires the information indicating the production track record value of the chemical substance from the plant 400.

### (Step S2-1)

The communication connection server 300 creates the track record value information including the information indicating the production track record value of the chemical substance.

### (Step S3-1)

The communication connection server 300 transmits the track record value information to the production plan creation device 100.

### (Step S4-1)

In the production plan creation device 100, the communication unit 101 receives the track record value information. The receiving module 102 receives the track record value information received by the communication unit 101.

### (Step S5-1)

The memory processing module 105 acquires, from the receiving module 102, the information indicating the production track record value of the chemical substance included in the track record value information, and stores the information in the memory unit 110 in association with year, month, and day and a clock time of the acquisition.

FIG. 8 is a flowchart for illustrating an example of the operation of the plant control system 1 in this embodiment. Processing of reviewing the primary production plan value by the production plan creation device 100 is described with reference to FIG. 8. As an example, a description is given of a case in which the primary production plan value is reviewed based on the ratio between the primary accumulated track record value EV and the primary accumulated plan value PV.

### (Step S1-2)

Operation of inputting, to the operation unit 108, the information indicating the target production amount of the chemical substance in the first period and the threshold value is executed. Through this operation, the acquisition module 103 acquires the information indicating the target production amount of the chemical substance in the first period and the threshold value.

### (Step S2-2)

The plan creation module 104 acquires the information indicating the target production amount of the chemical substance in the first period from the acquisition module 103. The plan creation module 104 creates the primary production plan value in the second period based on the acquired information indicating the target production amount of the chemical substance in the first period, and stores the primary production plan value in the memory unit 110.

### (Step S3-2)

The decision module 106 acquires, from the memory unit 110, one or a plurality of pieces of the information indicating the production track record value of the chemical substance acquired from a start time of the first period to a current time.

### (Step S4-2)

The decision module 106 acquires, from the memory unit 110, one or a plurality of pieces of the information indicating the primary production plan value of the chemical substance in the second period created from a start time of the first period to a current time.

### (Step S5-2)

The decision module 106 derives the primary accumulated track record value EV and the primary accumulated plan value PV.

### (Step S6-2)

The decision module 106 executes the primary production plan value determination processing based on information indicating the primary accumulated track record value EV and information indicating the primary accumulated plan value PV.

### (Step S7-2)

The decision module 106 determines whether the ratio between the primary accumulated track record value EV and the primary accumulated plan value PV is lower than the threshold value. When the ratio between the primary accumulated track record value EV and the primary accumulated plan value PV is not lower than the threshold value, the decision module 106 keeps the primary production plan value as the production plan value in the next second period, and the operation is returned to Step S3-2.

### (Step S8-2)

When the ratio between the primary accumulated track record value EV and the primary accumulated plan value PV is lower than the threshold value, the decision module 106 generates the corrected plan value obtained by correcting the primary production plan value in the next second period.

### (Step S9-2)

The decision module 106 reflects the corrected plan value obtained by correcting the primary production plan value in the next second period as the primary production plan value in the next second period. Thereafter, the operation is returned to Step S3-2.

In the above-mentioned embodiment, the case in which the primary accumulated track record value EV and the primary accumulated plan value PV are derived in the production plan creation device 100 has been described, but the present invention is not limited to this example. For example, the primary accumulated track record value EV and the primary accumulated plan value PV may be derived in another device other than the production plan creation device 100, such as the communication connection server 300. In this case, the production plan creation device 100 acquires the primary accumulated track record value EV and the primary accumulated plan value PV derived in the other device.

In the above-mentioned embodiment, the case in which solar energy and wind energy are mainly applied as an example of the variable renewable energy has been described, but the present invention is not limited to this example. For example, another kind of variable renewable energy such as tidal energy may be applied.

In the above-mentioned embodiment, the case in which ammonia is applied as an example of the chemical substance has been described, but another chemical substance may be applied.

In the above-mentioned embodiment, a plurality of plants may be controlled by the plant control system 1. In this case, identification information of the plant may be acquired in each step.

In the above-mentioned embodiment, a monthly amount of power generation may be calculated for each power generation facility, or a monthly planned production amount (overall) may be calculated based on a total amount of renewable energy power generation from a past power generation track record or the like.

In the above-mentioned embodiment, the operator may execute operation of inputting information indicating a target value of a production amount in a third period longer than the first period (hereinafter referred to as "long-term target production amount") before executing the operation of inputting the information indicating the target production amount of the chemical substance in the first period to the operation unit 108. With this configuration, the acquisition module 103 acquires the information indicating the long-term target production amount of the chemical substance in the third period. An example of the third period is one year, and the target production amount of the chemical substance in the third period may correspond to the long-term production plan or an off-take agreement amount. An example of the long-term production plan is an annual production plan. The description is continued below about a case in which the third period is one year as an example.

Concerning the operation of the plant 400, the production plan creation device 100 creates a long-term operation plan based on the long-term production plan. The production plan creation device 100 registers the created long-term operation plan in a database (not shown). The operation control device 200 acquires the long-term operation plan registered in the database by the production plan creation device 100. The operation control device 200 creates the plant operation control information for controlling the operation of the plant 400 based on the acquired long-term operation plan, and transmits the plant operation control information to the plant control device 450.

The long-term target production amount of the chemical substance in the third period may be a target production amount of the chemical substance derived from wind power, or a target production amount of the chemical substance derived from sunlight. The target production amount of the chemical substance in the third period may include both the target production amount of the chemical substance derived from wind power and the target production amount of the chemical substance derived from sunlight.

The plan creation module 104 acquires the information indicating the long-term target production amount of the chemical substance in the third period from the acquisition module 103. The plan creation module 104 creates the information indicating the target production amount in the first period based on the acquired information indicating the long-term target production amount of the chemical substance in the third period. Specifically, the plan creation module 104 creates the target production amount in the first period by breaking down the long-term target production amount of the chemical substance in the third period into a target value of the production amount in the first periods shorter than the third period.

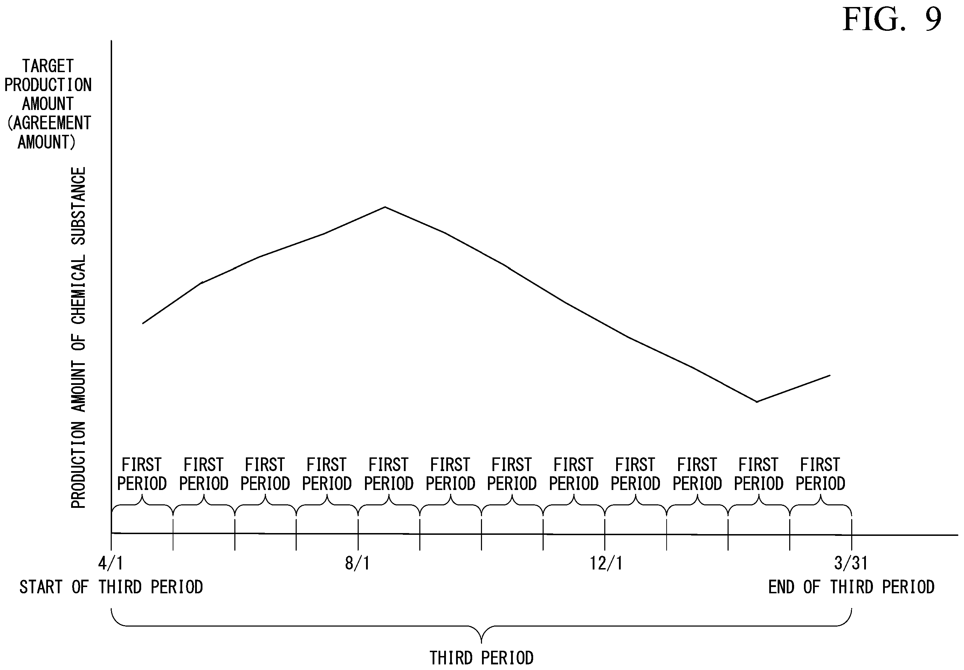

FIG. 9 is an explanatory graph for showing an example of the processing of the production plan creation device 100 of this embodiment. For example, the plan creation module 104 creates the information indicating the target production amount of the chemical substance in the first period by breaking down the long-term target production amount of the chemical substance in the third period into the target value of the production amount of the chemical substance in the first periods based on any one or both of an analysis result of past weather information and an analysis result of a past power generation track record. For example, the plan creation module 104 increases the target value of the production amount in the first period in which an amount of insolation is anticipated to be large out of a plurality of first periods relative to the target value of the production amount in the other first periods. As shown in FIG. 9, it is anticipated that the amount of insolation is large from July to September, and thus the target value of the production amount in the first period is increased for those months relative to the other months.

Specifically, for example, the plan creation module 104 breaks down the long-term target production amount of the chemical substance in the third period into the target production amount in the first periods by executing the following kinds of processing.
[1] The plan creation module 104 calculates statistics of a monthly amount of wind power generation and a monthly amount of solar power generation from wind conditions data, data of the amount of insolation, and specifications of a renewable energy power generation facility. The "specifications of a renewable energy power generation facility" used herein are equipment specifications (power generation efficiency and coefficients) of the power generation facility depending on the amount of insolation or wind conditions. For example, the plan creation module 104 calculates the amount of wind power generation in the first period (month by month) by multiplying the wind conditions data by the power generation efficiency of the renewable energy power generation facility. Further, the plan creation module 104 calculates the amount of solar power generation in the first period (month by month) by multiplying the data of the amount of insolation by the power generation efficiency of the renewable energy power generation facility. For example, the monthly amount of wind power generation and the monthly amount of solar power generation are calculated based on a past power generation track record of the same month, and an annual amount of wind power generation and an annual amount of solar power generation are calculated in consideration of an annual seasonal variation.
   The processing of [1] may be omitted when the track record of the amount of power generation by sunlight, the track record of the amount of power generation by wind power, and the like are known.
[2] The plan creation module 104 calculates a monthly production plan from the calculated monthly amount of wind power generation and monthly amount of solar power generation and a schedule of regular repair work (shutdown maintenance (SDM)).

The operator executes operation of inputting information indicating the schedule of the regular repair work to the operation unit 108. With this configuration, the acquisition module 103 acquires the information indicating the schedule of the regular repair work.

The plan creation module 104 acquires the information indicating the schedule of the regular repair work from the acquisition module 103. The plan creation module 104 calculates, by, for example, a formula (3), the target production amount of the chemical substance derived from wind power from the long-term target production amount in the third period, the number of operating days of the plant for the chemical substance in the first period, a total number of operating days of the plant (in the year), the amount of wind power generation in the first period, and a total amount of power generation in the first period. 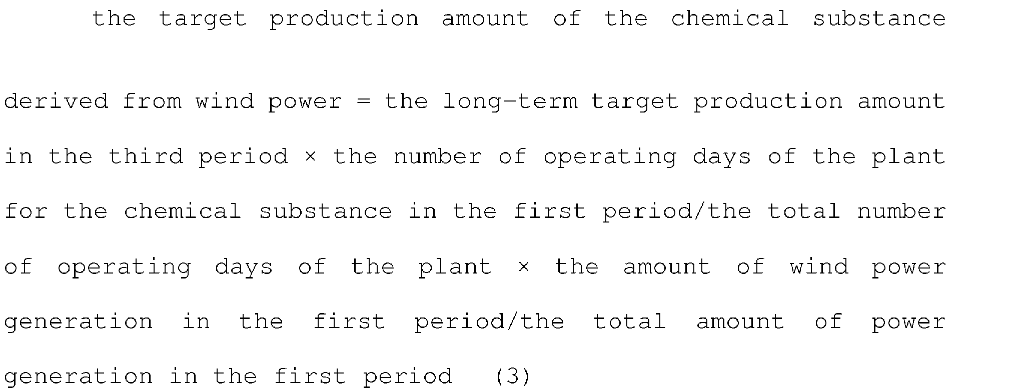 the target production amount of the chemical substance derived from wind power = the long-term target production amount in the third period × the number of operating days of the plant for the chemical substance in the first period/the total number of operating days of the plant × the amount of wind power generation in the first period/the total amount of power generation in the first period (3)

The plan creation module 104 calculates, by, for example, a formula (4), the target production amount of the chemical substance derived from sunlight from the long-term target production amount in the third period, the number of operating days of the plant for the chemical substance in the first period, the total number of operating days of the plant, the amount of solar power generation in the first period, and the total amount of power generation in the first period. 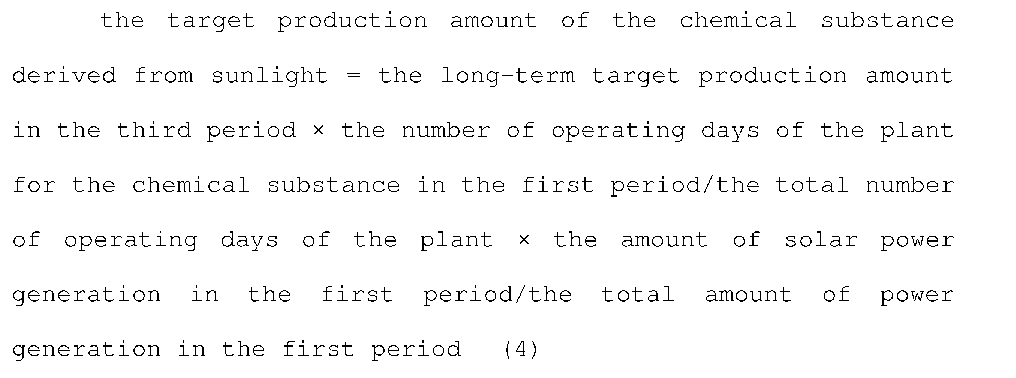 the target production amount of the chemical substance derived from sunlight = the long-term target production amount in the third period × the number of operating days of the plant for the chemical substance in the first period/the total number of operating days of the plant × the amount of solar power generation in the first period/the total amount of power generation in the first period (4)

The above-mentioned processing of [1] and [2] may be omitted when it is possible to acquire the monthly production plan amount of the chemical substance derived from sunlight and the monthly production plan amount of the chemical substance derived from wind power in consideration of both the track record of the amount of power generation by sunlight, the track record of the amount of power generation by wind power, and the like and the schedule of plant long-term stop due to the shutdown maintenance or the like.

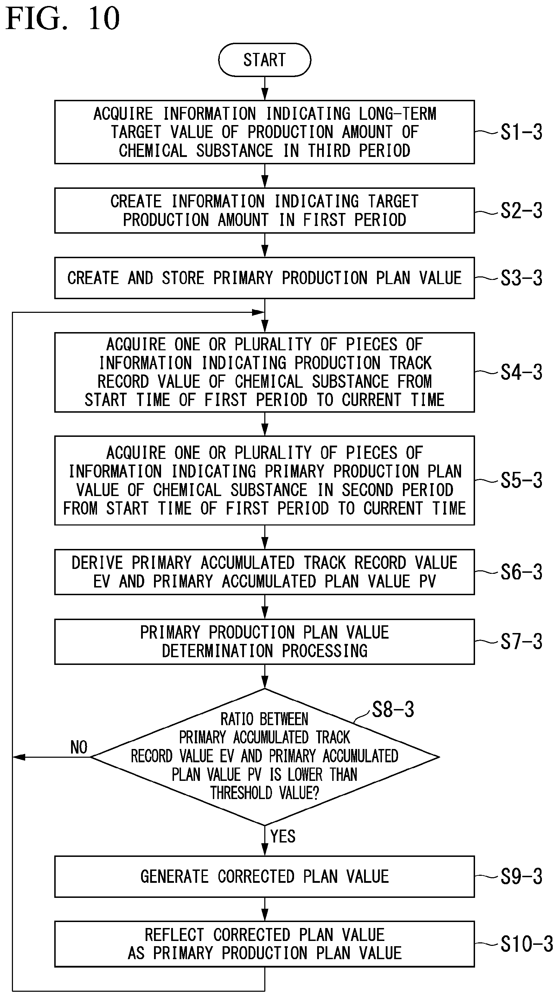

FIG. 10 is a flowchart for illustrating another example of the operation of the plant control system 1 in this embodiment. With reference to FIG. 10, a description is given of processing in a case in which the production plan creation device 100 acquires the information indicating the long-term target production amount of the production amount in the third period.

### (Step S1-3)

The operator executes operation of inputting, to the operation unit 108, the information indicating the long-term target production amount of the production amount in the third period. Through this operation, the acquisition module 103 acquires the information indicating the long-term target production amount of the chemical substance in the third period.

### (Step S2-3)

The plan creation module 104 acquires the information indicating the long-term target production amount of the chemical substance in the third period from the acquisition module 103. The plan creation module 104 creates the information indicating the target production amount in the first period based on the acquired information indicating the long-term target production amount of the chemical substance in the third period.

Step S2-2 to Step S9-2 in FIG. 8 can be applied to Step S3-3 to Step S10-3. Thus, description of Step S3-3 to Step S10-3 is omitted.

In the plant control system 1 in the embodiment, the production plan creation device 100 creates a production plan of the chemical substance manufactured by using hydrogen derived from variable renewable energy as a raw material. The production plan creation device 100 includes the acquisition module 103 that acquires the information indicating the target production amount being the target value of the production amount in the first period, and the plan creation module 104 that breaks down the target production amount in the first period into the primary production plan value being the production plan amount in the second periods shorter than the first period. The acquisition module 103 acquires the primary accumulated track record value being the accumulated value of the primary track record value being information indicating an actual production amount in each period of the second periods from a start time of the first period to a current time, and the primary accumulated plan value being the accumulated value of the primary production plan value from the start time of the first period to the current time. The production plan creation device 100 includes the decision module 106 that generates the corrected plan value obtained by correcting the primary production plan value in the next second period when the value derived based on the primary accumulated track record value and the primary accumulated plan value is smaller than the threshold value set in advance or keeps the primary production plan value in the next second period when the value derived is equal to or larger than the threshold value, to reflect the corrected plan value or the kept primary production plan value as the primary production plan value in the next second period.

With this configuration, the production plan creation device 100 can generate the corrected plan value obtained by correcting the primary production plan value in the next second period and reflect the corrected plan value as the primary production plan value in the next second period when the value derived based on the primary accumulated track record value and the primary accumulated plan value is smaller than the threshold value set in advance. Thus, the primary production plan value in the next second period can be reviewed as required so as to meet the target production amount in the first period. For example, medium-term (for example, in units of month) and short-term (for example, in units of day) advance production plans for a green chemical (for example, ammonia or the like) can be created from off-take agreement information or the like. Further, when it is anticipated that a difference between an operation algorithm executed by the operation control device 200 and an actual operation track record is generated, the production plan can be corrected as required such that the difference is corrected as appropriate and delay of the production from the plan based on the off-take agreement is avoided.

In the production plan creation device 100, when the difference or the ratio between the primary accumulated track record value and the primary accumulated plan value is less than the threshold value set in advance, the decision module 106 distributes the difference between the primary accumulated track record value and the primary accumulated plan value into the remaining second periods to generate the corrected plan value in the next second period.

With this configuration, the production plan creation device 100 can distribute the difference between the primary accumulated track record value and the primary accumulated plan value into the remaining second periods to generate the corrected plan value in the next second period. Thus, the primary accumulated track record value can be gradually brought close to the primary accumulated plan value compared with a case in which the difference between the primary accumulated track record value and the primary accumulated plan value is not distributed.

In the production plan creation device 100, the acquisition module 103 acquires the information indicating the long-term target production amount being the target value of the production amount in the third period longer than the first period before acquiring the target value of the production amount in the first period. In addition, the plan creation module 104 calculates the amount of wind power generation or the amount of solar power generation in the first period by using the wind conditions data and the power generation efficiency of the renewable energy power generation facility or the data of the amount of insolation and the power generation efficiency of the renewable energy power generation facility, and breaks down the long-term target production amount in the third period into the target production amount in the first periods based on a calculated value.

With this configuration, the production plan creation device 100 can calculate the amount of wind power generation or the amount of solar power generation in the first period by using the wind conditions data and the power generation efficiency of the renewable energy power generation facility or the data of the amount of insolation and the power generation efficiency of the renewable energy power generation facility, and break down the long-term target production amount in the third period into the target production amount in the first periods based on the calculated value. Thus, the primary production plan value in the next second period can be reviewed as required so as to meet the long-term target production amount in the third period.

In the production plan creation device 100, both the target production amount of the chemical substance derived from wind power and the target production amount of the chemical substance derived from sunlight are included in the target production amount in the first period. With this configuration, the production plan creation device 100 can break down the target production amount in the first period including the target production amount of the chemical substance derived from wind power and the target production amount of the chemical substance derived from sunlight into the primary production plan value in the second periods.

In the production plan creation device 100, the plan creation module 104 calculates the target production amount of the chemical substance derived from wind power based on the following formula. 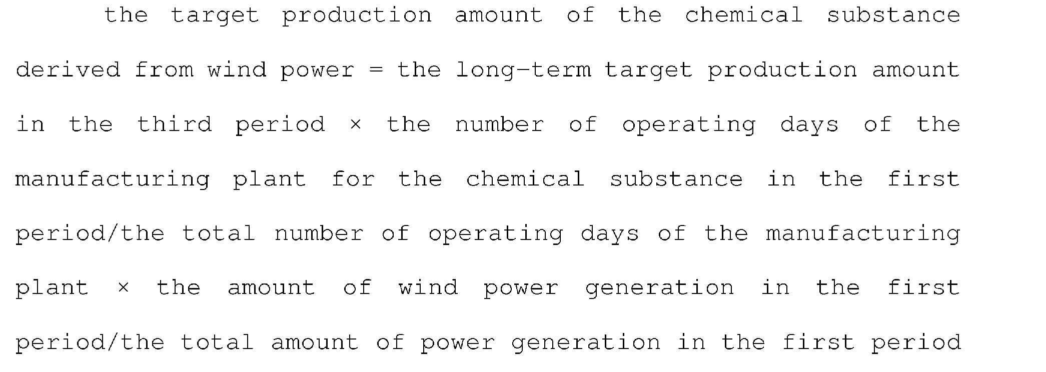 the target production amount of the chemical substance derived from wind power = the long-term target production amount in the third period × the number of operating days of the manufacturing plant for the chemical substance in the first period/the total number of operating days of the manufacturing plant × the amount of wind power generation in the first period/the total amount of power generation in the first period

With this configuration, the production plan creation device 100 can calculate the target production amount of the chemical substance derived from wind power. Thus, the calculation can be accurately executed compared with a case in which the calculation is based on none of the long-term target production amount in the third period, the number of operating days of the manufacturing plant for the chemical substance in the first period, and the total number of operating days of the manufacturing plant.

In the production plan creation device 100, the plan creation module 104 calculates the target production amount of the chemical substance derived from sunlight based on the following formula. 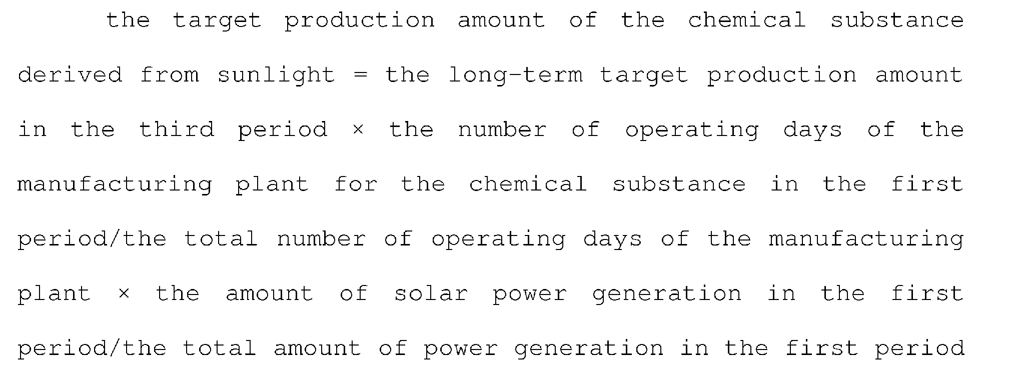 the target production amount of the chemical substance derived from sunlight = the long-term target production amount in the third period × the number of operating days of the manufacturing plant for the chemical substance in the first period/the total number of operating days of the manufacturing plant × the amount of solar power generation in the first period/the total amount of power generation in the first period

With this configuration, the production plan creation device 100 can calculate the target production amount of the chemical substance derived from sunlight. Thus, the calculation can be accurately executed compared with a case in which the calculation is based on none of the long-term target production amount of the chemical substance in the third period, the number of operating days of the manufacturing plant for the chemical substance in the first period, and the total number of operating days of the manufacturing plant.

Although the embodiment of the present invention has been described in detail above with reference to the drawings, specific configurations are not limited to this embodiment and design change and the like within such a range as not to depart from the gist of the present invention are also included. For example, a computer program for implementing functions of the above-mentioned respective devices may be recorded in a computer-readable recording medium, and the computer program recorded in this recording medium may be read and executed by a computer system. The "computer system" used herein may include an OS and hardware such as peripheral equipment.

Further, the "computer-readable recording medium" refers to a writable non-volatile memory such as a flexible disc, a magneto-optical disk, a ROM, or a flash memory, a portable medium such as a Digital Versatile Disc (DVD), or a memory device such as a hard disk incorporated in the computer system. Moreover, the "computer-readable recording medium" includes also a recording medium that retains a program for a certain time like a volatile memory (for example, dynamic random access memory (DRAM)) inside the computer system that serves as a server or a client in a case in which the computer program is transmitted through a network such as the Internet or a communication line such as a telephone line.

Further, the above-mentioned program may be transmitted from the computer system that stores this program in a memory device or the like to another computer system through a transmission medium or by a transmitted wave in the transmission medium. The "transmission medium" that transmits the program refers to a medium having a function of transmitting information like a network (communication network) such as the Internet or a communication line (communication wire) such as a telephone line.

Moreover, the above-mentioned program may be a program for implementing part of the above-mentioned functions. In addition, the above-mentioned program may be a program that can implement the above-mentioned functions by a combination with a program already recorded in the computer system, that is, a so-called differential file (differential program).

### Reference Signs List

1 ··· plant control system, 2 ··· power supply device, 100 ··· production plan creation device, 101 ··· communication unit, 102 ··· receiving module, 103 ··· acquisition module, 104 ··· plan creation module, 105 ··· memory processing module, 106 ··· decision module, 108 ··· operation unit, 109 ··· display unit, 110 ··· memory unit, 200 ··· operation control device, 300 ··· communication connection server, 400 ··· plant, 410 ··· first manufacturing device, 420 ··· storage device, 430 ··· flow rate control valve, 440 ··· second manufacturing device, 450 ··· plant control device, 452 ··· input/output module, 454 ··· hydrogen supply amount decision module, 456 ··· parameter memory unit, 458 ··· supply amount track record memory unit, 460 ··· storage remaining amount acquisition module

## Claims

1. A production plan creation method for a chemical substance manufactured by using hydrogen derived from variable renewable energy as a raw material, the production plan creation method comprising:
a first step of acquiring information indicating a target production amount being a target value of a production amount in a first period;
a second step of breaking down the target production amount in the first period into a primary production plan value being a production plan amount in second periods shorter than the first period;
a third step of acquiring a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and
a fourth step of generating a corrected plan value obtained by correcting the primary production plan value in a next second period when a value derived based on the primary accumulated track record value and the primary accumulated plan value is smaller than a threshold value set in advance or keeping the primary production plan value in the next second period when the value derived is equal to or larger than the threshold value, to reflect the corrected plan value or the kept primary production plan value as the primary production plan value in the next second period.

2. The production plan creation method according to claim 1, wherein the fourth step includes distributing, when a difference or a ratio between the primary accumulated track record value and the primary accumulated plan value is less than a threshold value set in advance, the difference between the primary accumulated track record value and the primary accumulated plan value into the second periods being remaining second periods, to generate the corrected plan value in the next second period.

3. The production plan creation method according to claim 1, further comprising:
an acquisition step of acquiring, before the first step, information indicating a long-term target production amount being a target value of a production amount in a third period longer than the first period; and
a breakdown step of breaking down the long-term target production amount in the third period into the target production amount in the first periods,
wherein the breakdown step includes calculating an amount of wind power generation or an amount of solar power generation in the first period by using wind conditions data and power generation efficiency of a renewable energy power generation facility or data of an amount of insolation and power generation efficiency of a renewable energy power generation facility, and breaking down the long-term target production amount in the third period into the target production amount in the first periods based on a calculated value.

4. The production plan creation method according to claim 3, wherein the target production amount in the first period includes a target production amount of the chemical substance derived from wind power and a target production amount of the chemical substance derived from sunlight.

5. The production plan creation method according to claim 4, wherein the breakdown step includes calculating the target production amount of the chemical substance derived from wind power based on: 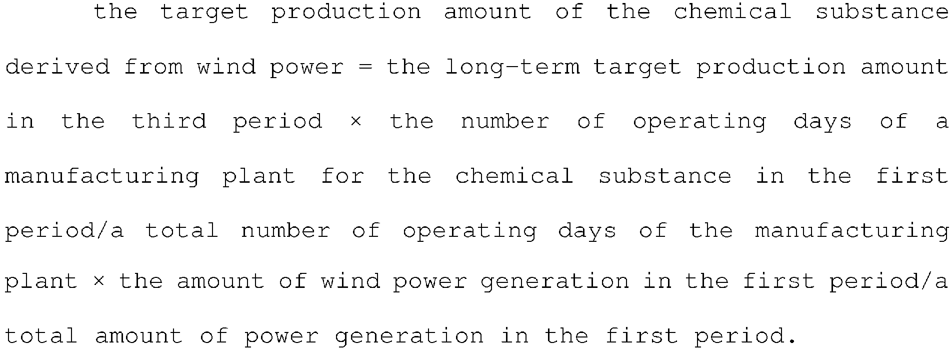 the target production amount of the chemical substance derived from wind power = the long-term target production amount in the third period × the number of operating days of a manufacturing plant for the chemical substance in the first period/a total number of operating days of the manufacturing plant × the amount of wind power generation in the first period/a total amount of power generation in the first period.

6. The production plan creation method according to claim 4, wherein the breakdown step includes calculating the target production amount of the chemical substance derived from sunlight based on: 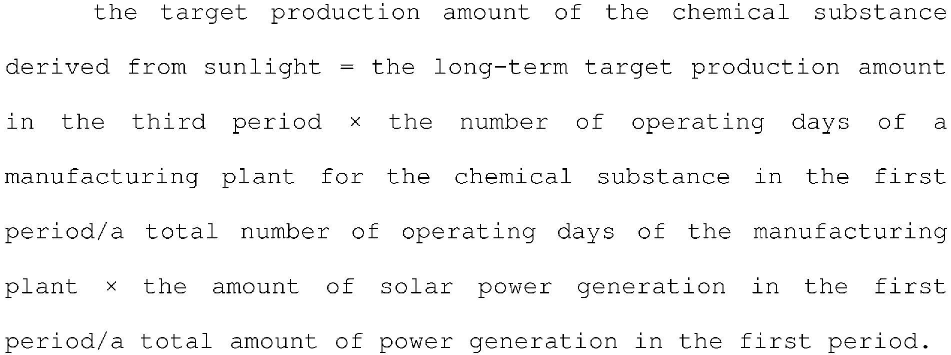 the target production amount of the chemical substance derived from sunlight = the long-term target production amount in the third period × the number of operating days of a manufacturing plant for the chemical substance in the first period/a total number of operating days of the manufacturing plant × the amount of solar power generation in the first period/a total amount of power generation in the first period.

7. A production plan creation device for a chemical substance manufactured by using hydrogen derived from variable renewable energy as a raw material, the production plan creation device comprising:
an acquisition module configured to acquire information indicating a target production amount being a target value of a production amount in a first period;
a plan creation module configured to break down the target production amount in the first period into a primary production plan value being a production plan amount in second periods shorter than the first period; and
a decision module configured to:
acquire a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and
generate a corrected plan value obtained by correcting the primary production plan value in a next second period when a value derived based on the primary accumulated track record value and the primary accumulated plan value is smaller than a threshold value set in advance or keep the primary production plan value in the next second period when the value derived is equal to or larger than the threshold value, to reflect the corrected plan value or the kept primary production plan value as the primary production plan value in the next second period.

8. A program for causing a computer of a production plan creation device for a chemical substance manufactured by using hydrogen derived from variable renewable energy as a raw material to execute:
a first step of acquiring information indicating a target production amount being a target value of a production amount in a first period;
a second step of breaking down the target production amount in the first period into a primary production plan value being a production plan amount in second periods shorter than the first period;
a third step of acquiring a primary accumulated track record value being an accumulated value of a primary track record value from a start time of the first period to a current time and a primary accumulated plan value being an accumulated value of the primary production plan value from the start time of the first period to the current time, the primary track record value being information indicating an actual production amount in each period of the second periods; and
a fourth step of generating a corrected plan value obtained by correcting the primary production plan value in a next second period when a value derived based on the primary accumulated track record value and the primary accumulated plan value is smaller than a threshold value set in advance or keeping the primary production plan value in the next second period when the value derived is equal to or larger than the threshold value, to reflect the corrected plan value or the kept primary production plan value as the primary production plan value in the next second period.
